# EUROPEAN PATENT APPLICATION

(11) **EP 4 542 451 A1**
(43) Date of publication of application: **23.04.2025**
(21) Application number: 23205027.8
(22) Date of filing: 20.10.2023
(51) Int. Cl.: G06N 5/01, G06N 20/00

(54) **CLASSIFYING A TYPE OF APPLIANCE ATTACHMENT**

(71) Applicant: Koninklijke Philips N.V., 5656 AG Eindhoven (NL)
(72) Inventor: ADITYA, Sagnik, 5656 AG Eindhoven (NL); KUSCH, Krzysztof Bernard, 5656 AG Eindhoven (NL); STEFAN, André Christian, 5656 AG Eindhoven (NL); DE GROOT, Ronald, 5656 AG Eindhoven (NL); KARTOZIYA, Inga, 5656 AG Eindhoven (NL); KROEZEN, Arno, 5656 AG Eindhoven (NL)
(74) Representative: Philips Intellectual Property & Standards

(57) **Abstract**

The subject-matter of the present disclosure relates to a computer-implemented method of classifying a type of attachment installed on an appliance. The computer-implemented method comprises: sensing (S200), by a sensor (18) of the appliance, data representing physical parameters associated with operating the appliance; classifying (S202), using a machine learning model, a type of attachment installed on the appliance based on the sensed data; and outputting (5204) a signal indicating the type of attachment installed on the appliance based on the detection.

## Description

### FIELD OF THE INVENTION

The subject-matter of the present disclosure relates to methods of classifying types of attachments installed on appliances, methods of training a machine learning model to classify a type of attachment installed on an appliance, transitory, or non-transitory, computer-readable media, and appliances.

### BACKGROUND OF THE INVENTION

An appliance includes an attachment for performing a function. For example, when the appliance is a personal care appliance, the attachment may be a cutting element and may perform the function of cutting a user's hair. It is possible to use an existing appliance with a new and different attachment. For example, where the attachment is a cutting element, there may be different types of cutting element that can be used with the same personal care appliance.

The user's experience using the personal care appliance may vary depending on the type of attachment attached to the appliance. However, most appliances do not include a mechanism that can detect the type of attachment that is attached to it.

It is an aim of the subject-matter of the present disclosure to improve on the prior art.

### SUMMARY OF THE INVENTION

According to a first aspect of the present invention, there is provided a computer-implemented method of classifying a type of attachment installed on an appliance, the computer-implemented method comprising: sensing, by a sensor of the appliance, data representing physical parameters associated with operating the appliance; classifying, using a machine learning model, a type of attachment installed on the appliance based on the sensed data; and outputting a signal indicating the type of attachment installed on the appliance based on the detection. In this way, the machine learning model enables automatic detection of the type of attachments installed on the appliance.

In an embodiment, the physical parameters comprise current and/or power of a motor used to drive the attachment.

In an embodiment, the classifying, using a machine learning model, a type of attachment installed on the appliance based on the sensed data comprises: calculating a plurality of predictors using the sensed data; and inputting the plurality of predictors to the machine learning model.

In an embodiment, the plurality of predictors are selected from a list of predictors including a binned distribution of motor power of a last use, average motor current of the last use, minimum motor current measured at end of the last use, and a binned distribution of motor power of the last use.

In an embodiment, the machine learning model is a decision tree. A decision tree is preferable to other types of machine learning models for this type of application since it is simpler and requires less processing and storage than e.g. a neural network.

In an embodiment, the appliance is a personal care appliance, and optionally wherein the attachment is a cutting element.

According to another aspect of the present invention, there is provided a computer-implemented method of training a machine learning model to classify a type of attachment installed on an appliance, the computer-implemented method comprising: receiving a dataset including a plurality of predictors derived from data sensed from a sensor of the appliance, the data representing physical parameters associated with operating the appliance, and classifications of a first type of attachment and a second type of attachment; inputting the plurality of predictors to the machine learning model to predict a classification of a first type of attachment or a second type of attachment; and optimising the machine learning model to reduce error between the predicted classification and the classification in the dataset.

In an embodiment, the machine learning model is a decision tree.

In an embodiment, the optimising the machine learning model is performed using a classification and regression tree algorithm.

In an embodiment, the physical parameters include current and/or power of a motor used to drive the attachment.

In an embodiment, the plurality of predictors are selected from a list of predictors including a binned distribution of motor power of a last use, average motor current of the last use, minimum motor current measured at end of the last use, and a binned distribution of motor power of the last use.

In an embodiment, the appliance is a personal care appliance, and optionally wherein the attachment is a cutting element.

According to an aspect of the present invention, there is provided a transitory, or non-transitory, computer-readable medium, having instructions stored thereon that when executed by a processor, causes the processor to perform the computer-implemented method of any preceding aspect or embodiment.

According to an aspect of the present invention, there is provided an appliance, comprising: an attachment for attaching a attachment thereto; a sensor for sensing physical parameters associated with operating the appliance; and a controller including a processor and storage, the storage having instructions stored thereon that when executed by the processor cause the processor to perform the computer- implemented method of any preceding aspect of embodiment.

These and other aspects of the present invention will be apparent from and elucidated with reference to the embodiment(s) described hereinafter.

### BRIEF DESCRIPTION OF THE DRAWINGS

The embodiments of the present inventions may be best understood with reference to the accompanying figures, in which:
Fig. 1 shows a schematic of a personal care appliance, according to one or more embodiments;
Fig. 2 shows a flow chart summarising a computer-implemented method of classifying a type of attachment installed on an appliance, according to one or more embodiments;
Fig. 3 shows a decision tree according to one or more embodiments; and
Fig. 4 shows a flow chart summarising a training a machine learning model to classify a type of attachment installed on an appliance.

### DETAILED DESCRIPTION OF THE EMBODIMENTS

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

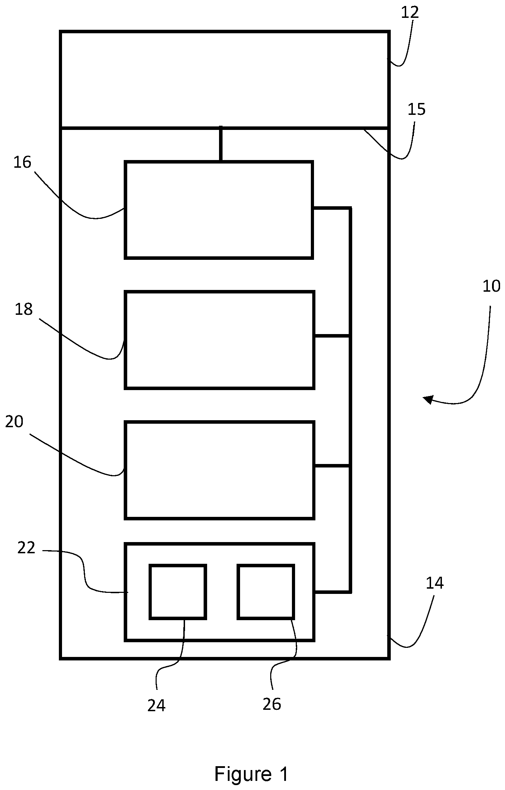

With reference to Fig. 1, an appliance 10 including an attachment 12 and a handle 14. The appliance 10 may be a personal care appliance. The personal care appliance may be a grooming appliance such as a hair cutting appliance. Hair cutting appliances generally involve hair trimmers, users, epilators, and combined devices. The personal care appliance 10 may be used for trimming and shaving.

The attachment may be a cutting element 12 comprising a stator and a moveable blade each comprising teeth. The moveable blade moves relative to the stator to cut hair between the teeth.

The handle 14 is elongate and has an attachment 15 for attaching to the cutting element. In other words, the attachment 15 is for attaching the cutting element 12 to the handle. The personal care appliance 10 further comprises a motor 16, a sensor 18, a controller 20, and an energy storage unit 22.

The motor 16 may be an electric motor 16 and may be connected to the cutting element to drive the blade. The motor 16 is powered by energy from the storage unit 22. The sensor may be a sensor 18 is configured to sense physical parameters associated with operating the appliance. The physical parameters include current and/or power of the motor 16.

The controller 20 comprises a processor 24 and storage 26. The storage 26 has instructions stored thereon that, when executed by the processor 24, cause the processor to perform any of the methods described below. The storage may thus form non-transitory, computer-readable media having instructions stored thereon that when executed by the processor cause the processor to perform any of the methods described herein. The instructions may also be provided on transitory computer-readable media that can be added to the storage when, for example, an update is required.

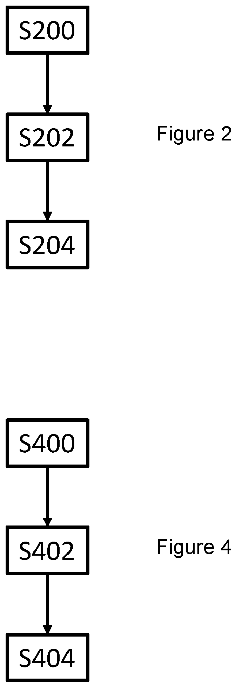

With reference to Fig. 2, a computer-implemented method of classifying a type of attachment installed on an appliance can be summarised as having steps including: sensing S200, by the sensor 18 of the appliance 10, data representing physical parameters associated with operating the appliance; classifying S202, using a machine learning model, a type of attachment installed on the appliance based on the sensed data; and outputting S204 a signal indicating the type of attachment installed on the appliance based on the detection.

The physical parameters comprise current and/or power of the motor 16 used to drive the attachment. The signal being output may be sent to a processor which may process one or more algorithms differently depending on the type of attachment that is installed on the appliance.

The classifying the type of attachment installed on the appliance comprises two main steps. In a first step, a plurality of predictors are calculated using the sensed data. In a second step, the plurality of predictors are input to the machine learning model. The predictors may includes one or more of binned distribution of motor power of a last use, average motor current of the last use, minimum motor current measured at end of the last use, and a binned distribution of motor power of the last use. Where the attachment is a cutting element, each use may correspond to a shave, for example.

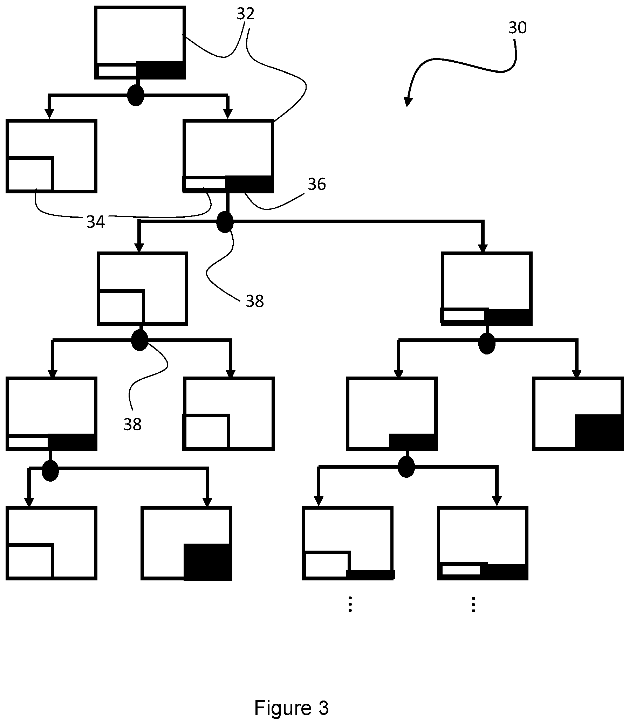

With reference to Fig. 3, the machine learning model may be a decision tree 30. The decision tree includes a plurality of nodes 32. Each node 32 is either a branch node or a leaf node. The branch node provides a split leading to two new nodes. The leaf nodes are output nodes outputting that the attachment is of a first type 34 or a second type 36, for example. The splits are different for each level of the tree. The splits may be numerical values and may be decided by training the machine learning model as explained below. One of the predictors 38 is applied after each branch node. The value of the predictor is compared to the split and if the predictor is less than or equal to the split, a first branch is taken. If the predictor is greater than the split, a second branch is taken. In Fig. 3, the first branch is a left branch, and the second branch is a right branch. This convention may be altered in other embodiments.

With reference to Fig. 4, a computer-implemented method of training the machine learning model to classify a type of attachment installed on an appliance is summarised as having steps including: receiving S400 a dataset including a plurality of predictors derived from data sensed from a sensor of the appliance, the data representing physical parameters associated with operating the appliance, and classifications of a first type of attachment and a second type of attachment; inputting S402 the plurality of predictors to the machine learning model to predict a classification of a first type of attachment or a second type of attachment; and optimising S404 the machine learning model to reduce error between the predicted classification and the classification in the dataset.

The optimising the machine learning model is performed using a classification and regression tree, CART, algorithm. The CART algorithm helps identify the splits to use at each level, the number of nodes, number of leaf nodes, etc.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A computer-implemented method of classifying a type of attachment (12) installed on an appliance (10), the computer-implemented method comprising:
sensing (S200), by a sensor (18) of the appliance, data representing physical parameters associated with operating the appliance;
classifying (S202), using a machine learning model, a type of attachment installed on the appliance based on the sensed data; and
outputting (S204) a signal indicating the type of attachment installed on the appliance based on the detection.

2. The computer-implemented method of Claim 1, wherein the physical parameters comprise current and/or power of a motor (16) used to drive the attachment.

3. The computer-implemented method of Claim 2, wherein the classifying, using a machine learning model, a type of attachment installed on the appliance based on the sensed data comprises:
calculating a plurality of predictors (38) using the sensed data; and
inputting the plurality of predictors to the machine learning model.

4. The computer-implemented method of Claim 3, wherein the plurality of predictors are selected from a list of predictors including a binned distribution of motor power of a last use, average motor current of the last use, minimum motor current measured at end of the last use, and a binned distribution of motor power of the last use.

5. The computer-implemented method of any preceding claim, wherein the machine learning model is a decision tree (30).

6. The computer-implemented method of any preceding claim, wherein the appliance is a personal care appliance, and optionally wherein the attachment is a cutting element.

7. A computer-implemented method of training a machine learning model to classify a type of attachment (12) installed on an appliance (10), the computer-implemented method comprising:
receiving (S400) a dataset including a plurality of predictors (38) derived from data sensed from a sensor (18) of the appliance, the data representing physical parameters associated with operating the appliance, and classifications of a first type (34) of attachment and a second type (36) of attachment;
inputting (S402) the plurality of predictors to the machine learning model to predict a classification of a first type of attachment or a second type of attachment; and
optimising (S404) the machine learning model to reduce error between the predicted classification and the classification in the dataset.

8. The computer-implemented method of Claim 7, wherein the machine learning model is a decision tree (30).

9. The computer-implemented method of Claim 8, wherein the optimising the machine learning model is performed using a classification and regression tree algorithm.

10. The computer-implemented method of any of Claims 7 to 9, wherein the physical parameters includes current and/or power of a motor (16) used to drive the attachment.

11. The computer-implemented method of Claim 10, wherein the plurality of predictors are selected from a list of predictors including a binned distribution of motor power of a last use, average motor current of the last use, minimum motor current measured at end of the last use, and a binned distribution of motor power of the last use.

12. The computer-implemented method of any preceding claim, wherein the appliance is a personal care appliance, and optionally wherein the attachment is a cutting element.

13. A transitory, or non-transitory, computer-readable medium, having instructions stored thereon that when executed by a processor, causes the processor to perform the computer-implemented method of any preceding claim.

14. An appliance (10), comprising:
an attachment formation for attaching an attachment (12) thereto;
a sensor (18) for sensing physical parameters associated with operating the appliance; and
a controller (20) including a processor (22) and storage (24), the storage having instructions stored thereon that when executed by the processor cause the processor to perform the computer- implemented method of any of Claims 1 to 6.
